# EUROPEAN PATENT APPLICATION

(11) **EP 2 602 294 A1**
(43) Date of publication of application: **12.06.2013**
(21) Application number: 12382483.1
(22) Date of filing: 05.12.2012
(51) Int. Cl.: C09J 175/00, B32B 7/12, B32B 27/18, B32B 27/40, B32B 27/08, C09J 11/08, C08B 37/08, C08B 37/00, C08G 18/64, C08G 18/40, C08L 5/08, C08L 7/00, C08J 3/11, C08L 5/00, C08L 101/12

(54) **Method for including barrier materials in adhesives**

(30) Priority: 09.12.2011 ES 201131986
(71) Applicant: Plasticos Romero, S.A., 30500 Molina de Segura (ES); Universidad De Murcia, 30003 Murcia (ES)
(72) Inventor: Garcia Ruiz, Pedro Antonio, 30500 Molina de Segura (ES)
(74) Representative: Temino Ceniceros, Ignacio

(57) **Abstract**

The present invention relates to a method for including barrier materials in the polyol component of a multilayer bi-component polyurethane adhesive without the addition of other solvents.

## Description

### Field of the invention

The present invention relates to a method for the introduction of barrier materials in the adhesive layer during the lamination process with bi-component, solvent-free polyurethane adhesives.

### State of the art

The adhesives most commonly used in the manufacture of multilayer systems by lamination are those of polyurethane-based, however, recently alternative adhesives such as for example those described in the patent application US20100160494, have been designed.

Adhesives between sheets in addition to providing the most effective union between the sheets, they are intended to provide gas impermeability. The patent application US 5763527 describes adhesives for polyol-based + isocyanate multi-sheets with a low contribution of said adhesive to the oxygen impermeability.

The patent application US6462163 refers to formulations of polyurethane-based adhesives for lamination based on polyesters-polyol without solvents and of high oxygen impermeability.

Often priority is given to the quality of the union between sheets and the absence of misting (US 20060105187). Therefore we can say that there are two avenues of research, a first avenue based on improving the gas impermeability by adding specific barrier layers, and not requiring barrier properties of the laminating adhesive. And a second avenue based on giving barrier properties to the adhesive.

There are numerous examples of the first avenue, which include specific layers with oxygen barrier properties (US5306533 and US20020012803), others including insulating layers in laminates containing polyvinyl acetate, activated charcoal or titanium dioxide as base materials (JP2006-117282 and EP1179557), or including a layer of oxidizable polymers such as drying oils and a oxidation catalyst (US201003233140).

The second avenue consisting of improving the contribution to the barrier properties of the laminating adhesive itself is preferably based on getting new formulations based on changes in the polyol and isocyanate constituents, as an example of the changes in the polyol component it is worth mentioning the use of polyester polyols designed (US20100119821) or, in the use of anhydrous hexitols (dianhydrohexitol 1,4:3,6) as components of the polyol phase (US20100136347).

Other variations in the composition of the bi-component laminating adhesive is the tendency for the polyol component in a ratio less than 30% of less reactive secondary hydroxyls to leave a defect of diisocyanate (US 20080308226).

The additivity with barrier materials of adhesive formulations has been much less explored, the only thing worth mentioning is an example of addition of Saran (US3630826) that includes the addition of co-adjuvants solvents to the polyol.

The patent application US2007135552 describes adhesives with inorganic nanoparticles dispersed (alumina, clays, calcium carbonate, etc.) to cause tortuous routes for the oxygen penetration.

Not another possibility consisting of carrying out specific additions according to the materials to be bonded (PET, PP, LDPE, etc.) and according to the product to be packed on the good laminating adhesives on the market with specific barrier materials for each case, has been explored at all.

It is also noteworthy that, while numerous types of sheets coextruded on plastics of a composition additivated with polysaccharides and other carbohydrates with excellent barrier properties have been described for the first avenue, this type of barrier materials have not been used for the additivation of polyurethane adhesives, probably because it have been described that they have low adhesion to apolar materials as those of the sheets to be bonded (US20090312462), also, there are problems derived from the alteration of the polyurethane adhesive by the addition of barrier materials.

There is therefore the need of providing a method for adding polyurethane adhesives that have high oxygen impermeability with low proportions of barrier material, low cost, allowing to solve the problems described in the state of the art.

### Description of the invention

Thus, in a first aspect, the present invention relates to a method for including barrier materials in the polyol component of a multilayer bi-component polyurethane adhesive without the addition of other solvents (hereinafter, the method of the present invention) comprising the following steps:
a) micronization of the barrier material;
b) dilution or dispersion of the barrier material in the hot polyol component

In a preferred embodiment, the method of the present invention comprises an additional step c) of sonicating the dispersion.

In another preferred embodiment, the method of the present invention comprises between the step a) and b) an additional step of drying the barrier material. In a preferred embodiment, this additional step is carried out when the added barrier materials are insoluble or poorly soluble in the polyol phase of the adhesive, and easily dispersible in said phase.

In another preferred embodiment, the method of the present invention comprises between the step a) and b) an additional step of microencapsulating the barrier material. In a preferred embodiment, this additional step is carried out when the added barrier materials are insoluble or poorly soluble in the polyol phase of the adhesive, and hardly dispersible in said phase. In a more preferred embodiment, the shell material for the microencapsulate is selected from polysaccharides, natural gums and/or film-forming polymers.

In the present invention by film-forming polymers we refer to the film-forming polymers described in the patent ES2319601.

In the present invention by cinnamic carbohydrates esters we refer to the esters described in the patent ES2189602.

In a preferred embodiment, the method of the present invention comprises an additional step of setting the additivated polyol component/adhesive diisocyanate component ratio. In a more preferred embodiment, this additional step is carried out when the barrier material comprises groups capable of reacting with isocyanates, in a more preferred embodiment, the setting of the additivated polyol/diisocyanate component ratio is carried out according to the new rate of hydroxyl in the mixture.

In a preferred embodiment, If the measurement of the cream time for the new composite adhesive is greater than that of the same adhesive without any additives, the method of the present invention comprises an step of setting the catalysis by addition to the polyol phase of greater proportions of catalyst or catalysts that use that laminating adhesive.

In a preferred embodiment, the step b) of the method of the present invention comprises between 0.1-10% by weight of the micronized barrier material.

In a preferred embodiment, the step b) of the method of the present invention comprises between 0.1-10% by weight of at least one polysaccharide.

In a preferred embodiment of the present embodiment, the barrier material is selected from chitosan, natural gum, acacia gum, tara gum, film-forming polymers, cinnamic carbohydrate esters, its derivatives and/or mixtures thereof.

In a preferred embodiment, the method of the present invention is carried out during the lamination method with bi-component, solvent-free polyurethane adhesives.

In a second aspect, the present invention relates to a multilayer adhesive (hereinafter adhesive of the present invention) obtained by the method of the present invention.

### Description of the figures

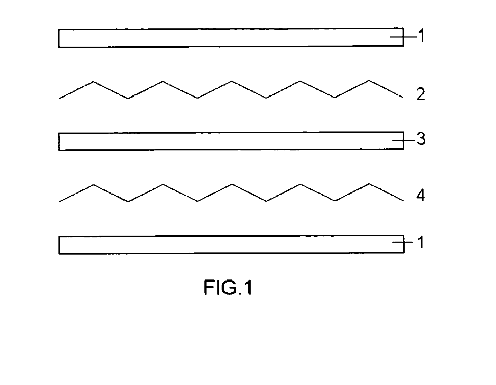

FIG. 1 shows a multilayer composition comprising (1) polyethylene (PE), (2) adhesive without any additives, (3) PET, (4) additivated adhesive.

### Detailed description of the invention

The inclusion of additives though they are insoluble or poorly soluble in the multilayer component of a multilayer bi-component polyurethane adhesive, and though it is made in low proportions (less than 5% by weight of the adhesive) causes noticeable imbalances in the reacting system (especially when it comes to polar substances) which are revealed generating problems such as increased curing times, decreased final adhesive strength between sheets, or the generation of bubbles and inhomogeneities in the laminate. Perhaps for this reason not enough practical importance is given to the additivity of the adhesive layer.

The following advantages are achieved through the method of the present invention: it is very versatile; it provides in a single operation a barrier layer and adhesion between sheets; it allows to get laminates with a greater impermeability with lower cost using other technologies; there can be incorporated much thicker layers than the barrier layers in the lamination using flexographic printing, which have proven to be effective.

The method was as follows:
a) Micronization of the compounds and drying of the barrier materials, if they are insoluble or poorly soluble in the polyol phase of the adhesive and easily dispersible in that phase, or microencapsulation of the barrier materials if they are insoluble or poorly soluble in the polyol phase of the adhesive and hardly dispersible in that phase (an insoluble or poorly soluble, and easily dispersible polysaccharide in the polyol phase of the adhesive was employed as a shell material).
(b) Heating of the polyol component of the adhesive to the recommended temperature for use.
(c) Dissolution or dispersion of the barrier material on the hot polyol component by vigorous stirring.
(d) Sonication of the dispersion, if it does not contain microencapsulates.
(e) In case addition of materials with groups capable of reacting with isocyanates, setting the ratio between the additivated polyol component and the diisocyanate component according to the new rate of hydroxyl in the mixture).
f) Measurement of the cream time of the new composite adhesive and in the case that this exceeds that of the same adhesive without any additives, setting the catalysis by addition to the polyol phase of greater proportions of catalyst or catalysts that use that laminating adhesive.
(g) Performing the union of sheets in the same way that is carried out with the adhesive without inclusion of barrier materials.
h) Once the curing time has elapsed the strength necessary to separate the sheets will be measured, value of which it must be equal to or greater than that of the union with the same non-additivated adhesive. In the case that it was lower, it should come back to the 6th phase) and rectify again the catalysis.

To set the ratio of the diisocyanate component to the additivated polyol when materials with hydroxyl, or amine groups were incorporated, it took into consideration if the component was soluble in the polyol phase and it could react fully at least their primary hydroxyl or amine groups, or if the component was poorly soluble or insoluble and therefore the reaction with isocyanate only takes place on the surface of the particle and therefore for polysaccharides insoluble in the polyol phase was only foreseen an increase between 5% and 20% of which was calculated as needed for the proposed addition (it is noteworthy that the ratio of barrier material against total weight of the polyol phase was always less than 10%).

The setting described in the step f) was very meticulous, especially when barrier materials which are at the same time capable of absorbing the catalytic components, were incorporated. For example with certain amines used as curing catalysts that can be blocked by functional groups of the additive or absorbed by polysaccharides not dissolved. Also the stearates, octoates or tin oleates can also act as surfactants surrounding insoluble particles thereby reducing its catalytic activity. Therefore a delicate setting of the catalysis greatly improved the adhesive strength, becoming unable in many cases to be measured because the sheets are broken before being detached, and under these conditions the effectiveness of the barrier is maximum.

Next the test for the measurement of the adhesive strength and oxygen permeability was carried out.

In order to facilitate the comparison between examples, for all the examples was selected the same type of adhesive for lamination of the Henkel brand which is composed by a isocyanate phase (Liofol UR 7738) and a polyol phase (Endurecedor La 6029) and the multilayer composition in FIG. 1.

Where the polyethylene sheets correspond to low density PE (LDPE) of 30 microns thick PE and that of PET has a thickness of 12 microns. And layers of adhesive have a thickness of 3 microns.

The ratio between the isocyanate component and polyol component in samples without any additives was: 100:70.

The sonication was performed using as instrument a Digital sonifier 450 of Branson ultrasonics brand and ran to a 400W power for 8 hours.

The adhesive strength between sheets was measured in laminates of 2 cm wide with an detachment run of 10 cm, being obtained for laminates with the adhesive without any additives an average value of maximum load of 1297 g and a detachment work of 1005 mJ.

The oxygen permeability of the multilayer system tested without the addition of additives to the adhesive layers was 111660 cm³/cm²·bar·day.

### Example 1. Incorporation of acacia gum as 2% barrier material with respect to the polyol phase in which is easily dispersible.

The measurement of the adhesive strength between sheets gave an average value of maximum load of 1045 g and a detachment work of 770 mJ, and once catalysis was modified it was not possible to measure it because the adhesion was so high that the breakage of the sheet took place sooner.

The modification of catalysis was the inclusion of 0.1 % in weight of catalyst Cosmos 29 of the EVONIK brand which is a 29% tin (II) isooctoate dilution.

The oxygen permeability for this multilayer was 26153 cm³/cm²·bar·day which represented an improved impermeability of 76,58% with respect to the adhesive without any additives.

### Example 2. Incorporation of chitosan as a 4% barrier material with respect to the polyol phase in which gives a good dispersion

The measurement of the adhesive strength between sheets gave an average value of maximum load of 925 g and a detachment work of 715 mJ that showed a too low adhesion between sheets, and once the catalysis was modified as in example 1, it was not possible to measure it because the adhesion was so high that the breakage of the sheet took place sooner.

The permeability to oxygen for this obtained multilayer was 10274 cm³/cm²·bar·day which represented an improved impermeability of 90.8% with respect to the adhesive without any additives.

### Example 3: Incorporation of cinnamate glycerin as a 2% barrier material with respect to the polyol phase in which it has a good dispersion

The measurement of the adhesive strength between sheets gave an average value of maximum load of 1154 g and a detachment work of 883 mJ, and once the catalysis was modified as in example 1, it was not possible to measure it because the adhesion was so high that the breakage of the sheet took place sooner.

The oxygen permeability for this obtained multilayer was 31707 cm³/cm²·bar·day which represented an improved impermeability of 71.6% with respect to the adhesive without any additives.

### Example 4: Incorporation of PIB as a barrier material

For micronizing this additive it was dissolved in ethyl acetate and the dilution was sprayed on dichloromethane to 0 °C.

Once the micronizate was dried it was added on the polyol phase at 40 °C in a quantity of 2 by weight obtaining a good dispersion.

The ratio between phases was not modified because this additive did not contain reactive groups and after the lamination test, it was found that the presence of the additive cause the adhesive to lose its properties and there was no adhesion between sheets, and for that reason the catalysis was modified as in example 1.

With the new formulation the adhesion between sheets was already good, obtaining an average value of maximum load of 1882 g and a detachment work of 1502 mJ.

The oxygen permeability for this obtained multilayer was 27491 cm³/cm²·bar·day which represented an improved impermeability of 75,38% with respect to the same adhesive without any additives.

### Example 5: Incorporation of tara gum as a 2% by weight barrier material with respect to the polyol phase in which it has a very good dispersion

The measurement of the adhesive strength between sheets gave an average value of maximum load of 977 g and a detachment work of 773 mJ, and once the catalysis was modified as in the previous example it was not possible to measure it because the adhesion was so high that the breakage of the sheet took place sooner.

The oxygen permeability for this obtained multilayer was 27325 cm³/cm²·bar·day which represented an improved impermeability of 75,53% with respect to the adhesive without any additives.

### Example 6: Incorporation of inulin cinnamate as a 2% by weight barrier material with respect to the polyol phase in which it has a very good dispersion.

As in the example 4, it did not glued without modifying the catalysis, and once modified, the measurement of adhesive strength between sheets gave an average value of maximum load of 694 g and a detachment work of 520 mJ.

The oxygen permeability for this obtained multilayer was 29164 cm³/cm²·bar·day which represents an improved impermeability of 73,88% with respect to the adhesive without any additives.

### Example 7: Incorporation of polyacrylamide as a 2% barrier material with respect to the polyol phase in which it has a good dispersion

Similar to example 4 and 6, it did not glued without modifying the catalysis, and once modified, the measurement of the adhesive strength between sheets gave an average value of maximum load of 1380 g and a detachment work of 915 mJ.

The oxygen permeability for this obtained multilayer was 32113 cm³/cm²·bar·day which represented an improved impermeability of 71,24% with respect to that without any additives.

### Example 8: Incorporation of Vinnapas as a barrier material

This barrier material is a vinyl laurate/vinyl acetate copolymer, soluble in hot xylene which was used for its micronization by spraying on acetone at 0 °C.

It was added on the hot polyol phase at a ratio of only 1.5% by weight since it is hardly dispersible.

As in the example 7, it did not glued without modifying the catalysis, and once modified as in the previous example, the measurement of the adhesive strength between sheets gave an average value of maximum load of 1270 g and a detachment work of 1003 very close to that of the adhesive without including the additive or modifying the catalysis.

The oxygen permeability for this obtained multilayer was 28126 cm³/cm²·bar·day which represented an improved impermeability of 74,81 % with respect to that without any additives.
The examples showed the following:
- High increases in the oxygen impermeability were achieved with additions below 5% of barrier materials of the adhesive.
- It was a very low-cost method to achieve large increases in the oxygen impermeability, which in turn enabled significant savings in thickness of the sheets with the consequent lowering cost of high-barrier products.
- It allowed the incorporation of water-soluble and insoluble polysaccharides in the polyol phase as effective barrier materials.

- It allowed the incorporation of hardly dispersible compounds in the polyol phase without the need of solvents added to the adhesive.
- It allowed to use micro- or nanoencapsulates of hardly dispersible barrier materials in the polyol phase of the adhesive (waxes, PVA, SBR, Saran, etc.) using polysaccharides, which acted as compatibilizers and are integrated by surface reaction on the three-dimensional network of urethane or urea linkages, as capsule materials.
- It allowed the choice of the type of barrier depending on the nature of the sheets and the product to be packaged thus optimizing the laminate for each specific application.

## Claims

1. Method for including barrier materials in the polyol component of a multilayer bi-component polyurethane adhesive without the addition of other solvents, comprising the following steps:
a) micronization of the barrier material;
b) dilution or dispersion of the barrier material in the hot polyol component

2. Method according to claim 1, **characterized in that** there is an additional step c) of sonicating the dispersion b)

3. Method according to any of claims 1-2, **characterized in that** between the step a) and b) there is an additional step of drying the barrier material.

4. Method according to claim 1, **characterized in that** between the step a) and b) there is an additional step of microencapsulating the barrier material.

5. Method according to claim 4, wherein the shell material for the microencapsulate is selected from polysaccharides, natural gums and/or film-forming polymers.

6. Method according to any of the preceding claims, **characterized in that** it comprises an additional step of setting the additivated polyol component/adhesive diisocyanate component ratio.

7. Method according to any of the preceding claims, which comprises the setting of the catalysis by addition to the polyol phase of reaction catalysts.

8. Method according to any of the preceding claims, wherein the dilution of step b) comprises between 0.1-10% by weight of the micronized barrier material.

9. Method according to any of the preceding claims, wherein the dilution of step b) comprises between 0.1-10% by weight of at least one polysaccharide.

10. Method according to any of the preceding claims, wherein the barrier material is selected from chitosan, natural gum, acacia gum, tara gum, film-forming polymers, cinnamic carbohydrate esters, its derivatives and/or mixtures thereof.

11. Method according to any of the preceding claims, **characterized in that** said method is carried out during the method of manufacturing multilayer systems by lamination with bi-component, solvent-free polyurethane adhesives.

12. Multilayer adhesive obtained by the method according to any of claims 1-11.
